# EUROPEAN PATENT SPECIFICATION

(11) **EP 3 900 998 B1**
(45) Date of publication and mention of the grant of the patent: **09.07.2025**
(21) Application number: 20382335.6
(22) Date of filing: 24.04.2020
(51) Int. Cl.: E04F 11/00, B61L 25/02, B60R 3/00, B61L 15/00

(54) **SYSTEM AND METHOD FOR FACILITATING ACCESS TO A GUIDED VEHICLE**
SYSTEM UND VERFAHREN ZUR ERMÖGLICHUNG DES ZUGANGS ZU EINEM GEFÜHRTEN FAHRZEUG
SYSTÈME ET PROCÉDÉ POUR FACILITER L'ACCÈS À UN VÉHICULE GUIDÉ

(43) Date of publication of application: 27.10.2021
(73) Proprietor: Siemens Rail Automation S.A.U., 28760 Tres Cantos (Madrid) (ES)
(72) Inventor: DIAZ ORTIZ, Antonio, 28806 Alcalá de Henares (ES)
(74) Representative: Siemens Patent Attorneys

(56) References cited:
- WO-A1-2012/042458
- DE-U1- 202011 106 862
- DOUG PAULLEY: "UK to Amsterdam by Train in a Wheelchair - Doug Paulley's blog", 17 February 2016 (2016-02-17), XP055736948, Retrieved from the Internet <URL:https://www.kingqueen.org.uk/uk-amsterdam-train-wheelchair/> [retrieved on 20201006]

## Description

The present invention concerns a system and a method for facilitating the access to a guided vehicle from a platform, notably adapted to persons with reduced mobility.

The present invention is essentially related to the field of guided vehicle, wherein the expression "guided vehicle" refers to public transport means such as subways, trains or train subunits, buses, etc., which are configured for transporting passengers and for which safety is a very important factor. Such guided vehicles are usually guided along a route or railway, e.g. by at least one rail, usually two rails.

More specifically, the present invention concerns the access to such guided vehicles from a platform for persons with reduced mobility.

Due to the use of different types of guided vehicles within a same network, platform floor levels are not always the same as guided vehicle floor levels, giving rise therefore to a vertical, and sometimes also horizontal, gap between the guided vehicle floor and the platform floor, making the access to the guided vehicle unsafe, notably for users with reduced mobility, e.g. using wheelchairs.

In order to solve this problem, different solutions exist, like manual or motorized gangways, elevators, or mobile ramps, which enable an operator to help a disabled user to access the guided vehicle.

Document WO 2012 042 458 A1 discloses a wheel-chair transfer system for transferring a person on a wheel-chair from a platform to a public transport vehicle or vice-versa.

Unfortunately, no satisfying automatic solution exists, and most solutions always require the presence of an operator. An objective of the present invention is to propose a system and method for automatically adapting a position of a gangway to each kind of guided vehicles stopping at a platform so that an easy access is automatically provided to disabled users for getting in and off any guided vehicle stopping at said platform.

For achieving said objective, the present invention proposes a system and a method as defined by the features of the independent claims for facilitating access to guided vehicles as disclosed by the objects of the independent claims. Other advantages of the invention are presented in the dependent claims.

The present invention concerns notably a system for providing to a user an access to a guided vehicle from a platform (or inversely to the platform from the guided vehicle), the system being preferentially configured for being installed on said platform, and comprising:
- a mobile gangway configured for enabling said user to access the guided vehicle;
- moving means configured for moving the mobile gangway with respect to the platform;
- detectors for determining an exact position of a door of the guided vehicle notably when the latter is stopped at said platform;
the system being characterized in that it further comprises a control unit configured for automatically determining a position for the mobile gangway with respect to the platform so that the mobile gangway (13) forms at said position a bridge between the guided vehicle door (22) and the platform (3).

Preferentially, said position is determined from guided vehicle access characteristics (hereafter "GVACs" - GVACs are for instance the height and/or distance to platform from guided vehicle floor) of the guided vehicle stopping at said platform and from said exact position. The control unit is further configured for automatically controlling said moving means for moving said mobile gangway to said position.

The present invention proposes also a method for providing an access to a guided vehicle stopping at a platform, the method comprising:
- automatically detecting a presence of a person, notably a person with reduced mobility, needing a mobile gangway for getting off or getting in the guided vehicle;
- if such a presence is detected, then automatically launching a position determination of the mobile gangway with respect to the platform. Preferentially, said position determination comprises
   ∘ receiving, by means of a control unit, GVACs for the guided vehicle stopping at said platform;
   ∘ automatically determining an exact position of a door of the guided vehicle once it stopped at the platform; and
   ∘ automatically determining a position for the mobile gangway from said GVACs and exact position;
- automatically controlling, by means of the control unit, moving means for moving the mobile gangway at the position that has been previously determined.

Further aspects of the present invention will be better understood through the following drawings, wherein like numerals are used for like and corresponding parts:
- Figure 1: schematic representation of a system according to the invention installed on a platform.
- Figure 2: schematic representation of a gangway for
- Figure 3: the invention. schematic representation of gangway extension plates for the invention.
- Figure 4: flowchart of a preferred method according to the invention.

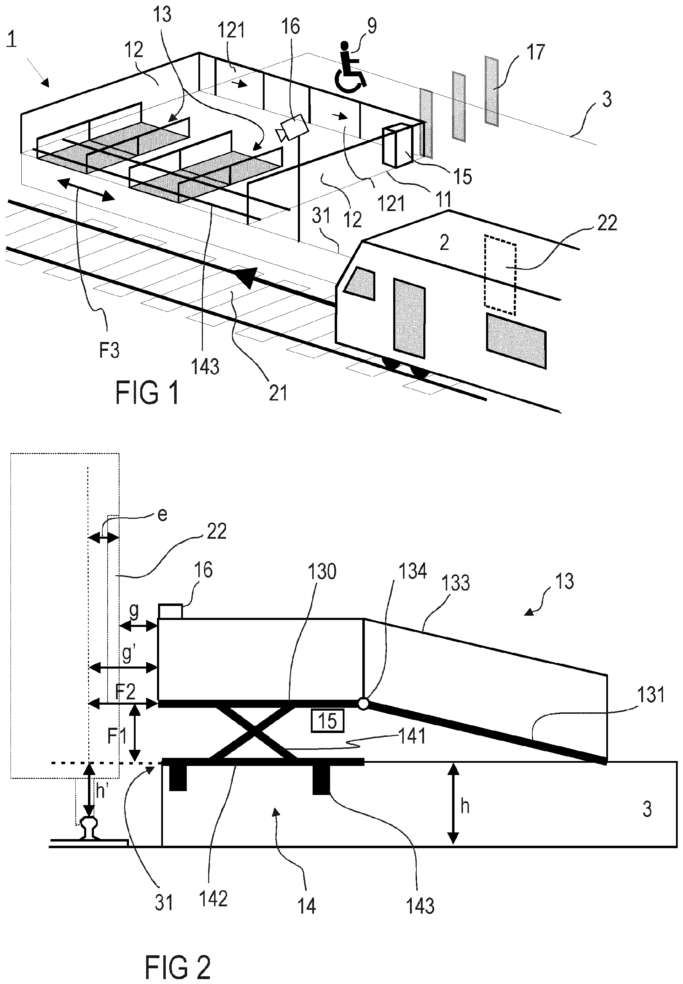

Figure 1 illustrates a preferred embodiment of a system 1 for accessing a guided vehicle 2 from a platform 3 according to the invention.

The system 1 is for instance arranged on a specific place 11 on the platform 3, said system 1 comprising for instance a set gates 12 surrounding the specific place 11 in order to prevent any passenger of the platform 3 accessing said specific place 11. Said gates 12 may comprise one or several doors 121, e.g. laterally sliding doors, configured for providing access to said specific place 11. The specific place 11 delimits an area wherein the system 1 according to the invention might change its position with respect to the platform 3. Therefore, because of a potential moving of the system 1 according to the invention and in order to ensure the security of users waiting for a guided vehicle 2 on the platform, such a specific place 11 is defined and enclosed by the gates 12.

The system 1 comprises one or several mobile gangways 13 configured for enabling a user or person 9, in particular a person with reduced mobility, to access the guided vehicle 2 when the latter stops at the platform 3, said mobile gangway 13 being configured and controlled by a control unit 15 so that it forms a bridge between the guided vehicle 2 and the platform 3. Moving means 14 (see Fig. 2) of the system 1 according to the invention are controlled by the control unit 15 and configured for automatically moving the mobile gangway 13 according to three degrees of freedom. Indeed, the moving means 14 are notably configured for lifting the mobile gangway from the platform floor level to an upper level and reversely down back to the platform floor level. This corresponds to the first degree of freedom illustrated by the arrow F1 in Fig. 2. For this moving along the first degree of freedom, vertical moving means known in the art might be used for lifting (i.e. moving vertically) the mobile gangway 13, like a telescopic lift or a scissor lift 141. The moving means 14 are further configured for moving or extending the mobile gangway 13 or a part of the mobile gangway 13 towards the guided vehicle 2, i.e. in a direction that is substantially perpendicular to the platform edge 31 that extends along the rail or track 21 on which the guided vehicle 2 stopping at the platform 3 arrives (and then departs). This corresponds to the second degree of freedom illustrated by the arrow F2 in Fig. 2. For this moving along the second degree of freedom, lateral moving means might be used. For instance, for this moving of the mobile gangway 13 or a part of it according to the second degree of freedom, the lateral moving means may comprise extension rails or bars 142 configured for extending along the second degree of freedom and for supporting the mobile gangway 13 or the vertical moving means (e.g. supporting for instance the telescopic lift or scissor lift 141), so that the latter can be moved, e.g. by means of actuators of the lateral moving means, on this extension rails or bars in the direction of the arrow F2. Finally, the moving means 14 are further configured for moving the mobile gangway 13 along a direction that is parallel to the platform edge 31 (or length), i.e. that extends along the rail or track 21 on which the guided vehicle 2 stopping at the platform 3 arrives (and then departs). This corresponds to the third degree of freedom illustrated by the arrow F3 in Fig. 1. For this moving along the third degree of freedom, longitudinal moving means might be used. In other words, the mobile gangway 13 is configured for moving longitudinally along the track or rails within the specific place 11. This provides the advantage that the guided vehicle 2 stopping at the platform does not need to stop at an exact and fix location, but has some margin corresponding to the longitudinal length of the specific place 11. Indeed, the system 1 according to the invention will automatically adapt the longitudinal position of the mobile gangway 13 to a door position of the guided vehicle 2 at the platform, notably when this door position is located within the longitudinal extension of the specific place 11. For this purpose, the moving means 14 may comprise longitudinal moving means configured for moving the mobile gangway 13 in a direction parallel to the edge 31 (i.e. substantially parallel to the track or rail or length of the guided vehicle 2 stopping at the platform3). Said longitudinal moving means might comprise a frame supporting the lateral and vertical moving means. Said frame might be supported by wheels configured for either moving on the platform (i.e. on the platform floor) or on rails 143 of the system installed on the platform 3 and extending along the edge 31. According to the embodiment of Fig. 1, the longitudinal moving means limit a longitudinal motion of the mobile gangway 13 to the specific place 11. But the longitudinal moving means 14 according to the invention might also be not fixed to the platform (e.g. in the case of the frame supported by wheels contacting directly the platform floor) so that it enables a displacement, of course at low speed and incorporating safety displacement means, along the edge 31 and not limited to the specific place 11. In such a case, the system is preferentially an autonomous automatic robot configured for automatically and autonomously adapting its position on the platform for facilitating users to access the guided vehicle 2 by providing a gangway from the platform floor to the guided vehicle floor. In such a case, the system comprises preferentially one or several cameras for acquiring images of a surrounding environment of the autonomous automatic robot, wherein the control unit 15 is configured for determining a path for the robot along the platform 3, e.g. by the control unit 15 being configured for controlling the moving means, e.g. the longitudinal moving means, so that they follow a predetermined line affixed or painted on the floor of the platform 3 until reaching a position that should correspond to the position of a door 22 of the guided vehicle when the latter stops.

In order to control the moving means 14, the system 1 according to the invention comprises said control unit 15, which can be installed on a frame of the moving means (see Fig. 2), e.g. the frame of the longitudinal moving means, or which can be located on the specific place 11 (see Fig. 1) or at a remote location with respect to the platform 3. Said control unit 15 is connected, e.g. with a wired or wireless connection, to the moving means 14 and to detectors 16 in order to exchange signals with them. The detectors 16 according to the invention are configured for enabling a determination of an exact position of a door 22 of the guided vehicle 2 when the latter stopped at said platform 3. They can use several known in the art techniques, which can be combined with each other. For instance, the detectors 16 can comprise:
- one or several detection cameras (see Fig. 1) configured for acquiring images of each guided vehicle 2 stopping at the platform 3, wherein a processor of the control unit 15 is then configured for identifying a door 22 on the images acquired by the camera and determining its exact position with respect to a reference position, wherein said reference position is for instance a current position of the mobile gangway 13 or a predefined location on the platform 3. Said detection cameras might also be used for acquiring said images of the surrounding environment of the automatic autonomous robot; and/or
- sensor system comprising one or several sensors, like RFID sensors and/or proximity sensors (e.g. ultrasonic sensors) and/or IR sensors, wherein the sensor system is controlled by the control unit 15 for determining the exact position of the door. Said sensor system may comprise one or several sensors mounted on the guided vehicle and/or one or several sensors installed on the system according to the invention, e.g. on the mobile gangway and/or on a frame supporting the mobile gangway. Known in the art techniques might be used by the control unit 15 for finding/determining the exact position of the door 22 from the signals sent by the sensor system. Different types of sensors and techniques might be used for said finding/determination.

In particular, the launching of the position determination of the mobile gangway 13 carried out by said control unit 15 is triggered by the reception of two signals, namely a first signal and a second signal. For this purpose, the control unit 15 according to the invention is in particular configured for communicating with the guided vehicle 2 and/or a remote control center. In particular, the first signal is a signal sent by the arriving guided vehicle 2, or by a remote control center, or by the detector 16, wherein said first signal comprises data indicating the arrival and stopping of the guided vehicle at the platform, optionally a time at which the guided vehicle will stop. The second signal is a signal configured for indicating the presence or absence of a user needing the mobile gangway. For this purpose and preferentially, the system according to the invention comprises a presence detector installed on-board the guided vehicle (e.g. within a space comprising said door 22, wherein the presence detector is configured for determining a presence or absence of said user within said space) and/or on the platform and configured for detecting a presence or absence of a user needing the mobile gangway, and sending to the control unit 15 said second signal: for instance, a user on-board the guided vehicle is needing the mobile gangway to get off the train and/or a user waiting on the platform is needing the mobile gangway to get in the guided vehicle from the platform 3. For instance, the detector 16 might be used by the control unit 15 for detecting the arrival and stopping of the guided vehicle 2 at the platform, and/or a presence of a user needing the mobile gangway 13 at said platform. The system according to the invention may further comprise said presence detector installed on-board the guided vehicle and/or on the platform 3 and configured for sending said second signal. Said presence detector can be a push button that needs to be pushed by a user needing the mobile gangway for getting in or off the guided vehicle 2, pushing said button sending to the control unit 15 said second signal involved in the triggering of the position determination of the mobile gangway 13. According to other embodiments, said presence detector can comprise one or several camera systems configured for identifying a user needing a mobile gangway 13, and/or a wireless or RFID device installed in gates 17 on the platform and implementing a transparent corridor detection, wherein said wireless or RFID device is configured for detecting the presence of a user in need of the mobile gangway 13.

The reception of said two signals by the control unit 15 triggers the start of the position determination of the mobile gangway only if the first signal indicates the arrival and stopping of the guided vehicle and the second signal indicates a presence of a user in need of the mobile gangway 13.

Preferentially, the control unit 15 comprises one or several processors, a memory, connection means and communication means. The control unit 15 is configured for automatically determining a position of the mobile gangway 13 in function of a door position of the guided vehicle 2 which stopped at the platform 3. As previously mentioned, said determination of the position of the mobile gangway 13 might be triggered by the reception of said two signals indicating the arrival and stopping of the guided vehicle at the platform and the presence (on-board the guided vehicle and/or on the platform) of a user in need of the mobile gangway for getting in or off the guided vehicle 2.

In order to determine the position of the mobile gangway 13, the control unit 15 is configured for acquiring GVACs for the guided vehicle 2 stopping at the platform 3. Said GVACs might be acquired or received from one or several GVACs providers. A GVACs provider is for instance a remote control center, or the memory of the control unit 15, or a database, or the guided vehicle stopping at said platform 3, or a sensor device of the system according to the invention. In particular, said GVACs may comprise an identification of the guided vehicle that is going to stop at the platform. Preferentially, the control unit 15 is configured for identifying the guided vehicle 2 that is going to stop at said platform. For instance, the control unit might receive from the guided vehicle 2 or a remote control center an identification signal comprising an identification parameter enabling the control unit to identify the incoming guided vehicle. Additionally, or alternately, the control unit 15 may identify the stopping guided vehicle 2 from a schedule stored in said memory or database, wherein said schedule comprises or indicates the identity (or type) of the guided vehicles stopping at said platform 3 in function of the time. In such a case, the control unit 15 simply identifies the guided vehicle from its arrival time at the platform, each arrival time identifying or corresponding to a guided vehicle. Preferentially, and as mentioned before, said first signal may comprise the time at which the guided vehicle will stop at the platform, said time being used by the control unit 15 for identifying the guided vehicle and said GVACs. Indeed, from the identification of the guided vehicle, e.g. from said identification parameter, the control unit is configured for determining said GVACs: for instance, the memory or database comprises for, or associates to, each guided vehicle one or several GVACs. Optionally or alternately, the identification signal or said first signal already comprises said GVACs.

Thus, according to the present invention, the control unit 15 is preferentially configured for acquiring GVACs for the guided vehicle stopping at the platform. Said GVACs might be acquired from the guided vehicle itself or a remote control center through a communication with said guided vehicle or remote control center, or by associating to an identified stopping guided vehicle GVACs stored in a memory and characterizing the stopping guided vehicle. Alternately or in addition, the control unit 15 may use said sensor device for automatically and autonomously acquiring said GVACs: for instance, the sensor device may comprise one or several cameras, installed on the mobile gangway 13 and/or a frame supporting the mobile gangway 13, and enabling the control unit 15 to determine said GVACs, like the width of the door 22 or the height of the floor, from images acquired in real time by said cameras, and used therefore for the position determination of the gangway 13.

The GVACs according to the invention provide information about the access to the guided vehicle. It may comprise:
- position(s) of the doors with respect to the guided vehicle length; and/or
- estimated positions of the doors with respect to the platform after stop of the guided vehicle; and/or
- width of the doors; and/or
- number of doors; and/or
- height of the floor of the guided vehicle with respect to the platform floor, or with respect to the track or rail contact surface; and/or
- distance between successive doors; and/or
- estimated gap between the guided vehicle side and the platform, i.e. lateral gap or distance between the edge 31 and the door; and/or
- and other relevant information for enabling the control unit 15 to calculate a position for the mobile gangway that coincides with the position of a guided vehicle door 22 once it stopped at the platform.

The control unit 15 may further store in its memory additional information for automatically determining a position for the mobile gangway with respect to the platform, like the height h of the platform (i.e. the vertical distance separating the track surface plane from the platform floor plane). From this height h, it can determine also the height h', i.e. the vertical distance separating the contact surface of the rail from the platform floor plane. Knowing then for instance from the GVACs the height of the guided vehicle floor (defined for instance as the distance separating the guided vehicle floor from the rail contact surface), the control unit 15 may automatically calculate the distance separating the platform floor from the guided vehicle floor. The same applies for the lateral gap g, which can be determined by the control unit 15 as the difference between the lateral distance g' separating a rail from the platform and the distance e defined as the distance separating the plane in which the wheel are rotating and the external side of the vehicle door 22. According to the present invention, such parameters like h, h', g, g', e, are also guided vehicle access characteristics and might be stored in a database or in the memory of the control unit 15 so that the latter can calculate for each guided vehicle 2 stopping at the platform the best position for the mobile gangway 13.

According to the present invention, the specific place 11 could be the whole platform 3, wherein gates 17 are used by the control unit 15 for determining whether a person with reduced mobility accessed the platform 3 or only a part of the platform 3. In such a case, the specific place 11 might be located on the platform at a location defined in function of a predetermined configuration of guided vehicles moving on a railway network comprising a stop at said platform 3. Said predetermined configuration of the guided vehicle ensures to always have at least one car of the guided vehicle that is located, with respect to the length of the guided vehicle, at a position that will correspond to the position of the specific place 11 when the guided vehicle stops at the platform 3. The length of the specific place 11 according to the edge 31 would be typically ~10 meters. Once the guided vehicle stopped with a car in front of the specific place 11, the system according to the invention will automatically find the door 22 of said car and place the mobile gangway 13 in front of said door.

The control unit 15 uses the GVACs and the determined exact position for determining a position of the mobile gangway 13, for instance with respect to the platform 3 or said reference position. For instance, it can use first the GVACs for roughly positioning the mobile gangway 13 while the guided vehicle 2 is stopping at the platform, and then it uses said exact position for refining the positioning or position determination of the mobile gangway 13. In any case, both the GVACs and the exact position are used for controlling the moving means 15 in order to automatically position the mobile gangway 13 in front of the door 22 of the stopped guided vehicle 2. The control unit 15 is configured for automatically controlling each of the lateral, longitudinal and vertical moving means of the moving means 14 for positioning within a 3-dimension space the mobile gangway 13.

Preferentially, the mobile gangway 13 might comprise a horizontal plate 130, preferentially rectangular. In particular, the horizontal plate 130 is supported by a frame that can be moved up and down by the vertical moving means. Said horizontal plate is notably large enough for receiving a wheelchair.

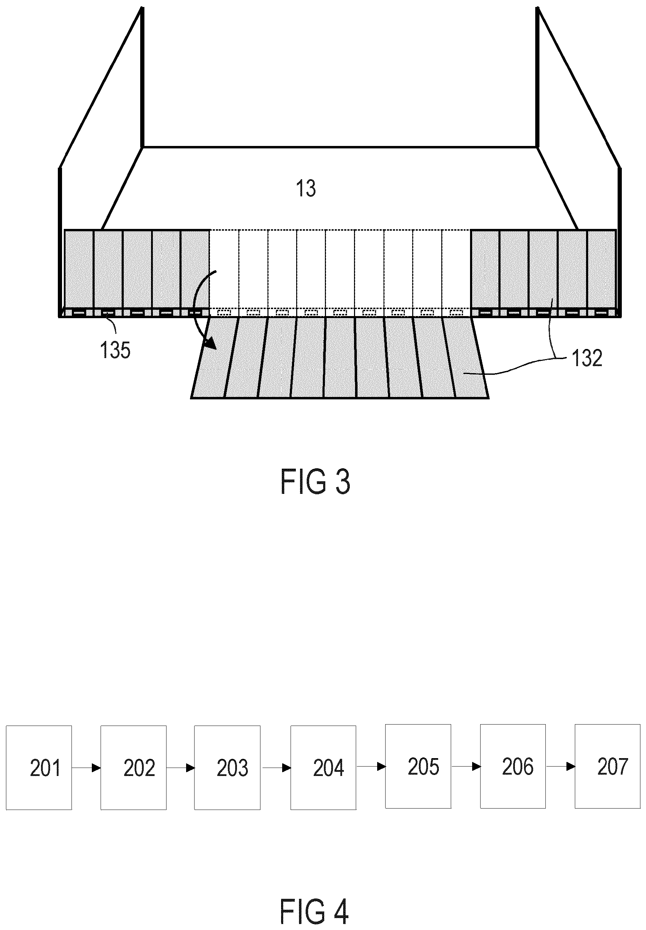

The horizontal plate extends according to its length in a direction perpendicular to the edge 31 when facing a stopped guided vehicle. Preferably, one of the horizontal plate edges according to its length is preferentially connected to a ramp 131 extending from the horizontal plate 130 to the platform floor. According to its length, the horizontal plate 130 has one edge that is configured for bridging the gap g between the door 22 and the platform 3, and another edge that is the edge connected to the ramp 131. The connection between said another edge and the ramp 131 is preferentially made by a coupling comprising a rotary member 134 enabling a rotation of the ramp around an axis extending widthwise at said another edge of the horizontal plate 130, so that the ramp 131 automatically accommodates any moving up or down of the horizontal plate 130. Each lateral side of the horizontal plate 130 and optionally of said ramp 131 might be delimited by vertical gates 133 installed for ensuring the safety of a user of the mobile gangway 13. Preferentially, and as shown in Fig. 3, the mobile gangway 13 may comprise a series of mobile plates or slats 132 configured for bridging a gap between the mobile gangway 13 and the guided vehicle floor. Said mobiles plates 132 equip the edge of the horizontal plate 130 opposite to said another edge connected to the ramp 131. Preferentially, each mobile plate 132 is characterized by two positions: a raised position, wherein the mobile plate 132 is substantially vertical, and a deployed position, wherein the mobile plate 132 is substantially horizontal. Each mobile plate comprises a detector 135 for detecting whether the mobile plate is facing an open door (i.e. an aperture of the guided vehicle) or a side of the guided vehicle (i.e. a wall). Said detector 135 can use an ultrasound sensor or any other method for detecting whether the door is open or closed. As long as the door is not open and/or as long as the detector detects a side of the guided vehicle, the control unit 15 is configured for keeping the mobile plate 132 in its raised position. Each mobile plate 132 in the raised position, respectively in the deployed position, lies in a same substantially vertical plane, respectively substantially horizontal plane. As soon as the detectors 135 of a whole set of directly successive mobile plates whose width correspond approximately to the width of the door of the guided vehicle detected an open door, the control unit is configured for deploying all mobile plates 132 of this set. According to the present invention, each mobile plate 132 is individually motorized so that its deployment completely saves the gap between mobile gangway and the guided vehicle floor. This ensures the use of the mobile gangway with any kind of guided vehicle whatever the characteristics of door separation, door width or height between guided vehicle floor and platform are.

Preferentially, at reception by the control unit of a departure signal indicating the departure of the guided vehicle, the control unit 15 moves the mobile gangway 13 to a safe position, e.g. a reference position. Optionally, at reception of said departure signal and before moving the mobile gangway, the control unit 15 first raises any deployed mobile plate 132 in its raised position and only then moves the mobile gangway to said safe position. Preferentially, before moving to said safe position, or optionally, before raising any deployed mobile plate 132, the control unit 15 uses the detectors 16 or other sensors, e.g. installed on the mobile gangway 13, to determine whether the mobile gangway is free of any user or still occupied, said moving or raising taking place only if said mobile gangway is free of any user. The departure signal might be received by the control unit 15 from a remote control center, or from a operator, or from the guided vehicle 2. Advantageously, to prevent unsafe situations, the control unit 15 preferentially automatically sends an alarm signal to said guided vehicle and/or control center in the case the mobile gangway 16 is still occupied while the departure signal has been received.

Figure 4 illustrates a preferred embodiment of the method for facilitating access to a guided vehicle according to the invention. The method comprises preferentially the following steps with respect to the system illustrated in Figs. 1-3:
At step 201, for each guided vehicle 2 that is going to stop at the platform, the control unit 15 automatically determines whether a person with reduced mobility needs the mobile gangway 13 for getting off or getting in the guided vehicle 2. In particular, the control unit 15 automatically receives from the guided vehicle 2 or from the control center or from its detector 16 said first signal configured for indicating the arrival and stopping of the guided vehicle 2 at the platform 3. In addition to the control unit 15 automatically receives said second signal comprising data indicating a presence or absence of a user needing the mobile gangway 13 for getting in or off the guided vehicle. In particular, said second signal might be received by the control unit 15 from one or several presence detectors installed on the platform 3 and/or in the guided vehicle. Said presence detectors are for instance said gates 17 configured for creating a detection corridor that provides access to the specific place 11 on the platform 3, and in the guided vehicle 2, it can be a push button notably installed at a predefined location in the guided vehicle 2, for instance within a guided vehicle car specifically designed for people with reduced mobility. The control unit 15 may automatically receive said first and second signals. Said first and second signals are thus used by the control unit 15 for automatically detecting a presence of a person with reduced mobility needing the mobile gangway for getting off or getting in the guided vehicle 2.

If the presence of a user needing the mobile gangway 13 is detected by the control unit 15, then the latter automatically launches, at step 202, a position determination of the mobile gangway. This position determination carried out by the control unit 15 is thus triggered by the first and second signal indicating respectively the stopping of the guided vehicle at the platform and the need of the mobile gangway by a user. If at least one of the first and second signal does not indicate such a stopping or such a presence, then the position determination of the mobile gangway does not take place. For said position determination, the control unit 15 is configured for automatically receiving or acquiring said GVACs (step 203) and for automatically detecting or determining (step 204) an exact position of a door of the guided vehicle once it stopped at the platform. And then, at step 205, it automatically determines the position of the mobile gangway with respect to the platform from said GVACs and exact position. The GVACs and exact position enable the control unit to calculate the position of the mobile gangway 13 that is required for accessing the guided vehicle from the platform 3, notably from said specific place 11.

At step 206, the control unit 15 automatically controls said moving means 14 for moving the mobile gangway 13 at said position. For instance, using the GVACs, the control unit 15 automatically controls the longitudinal moving means for longitudinally moving the mobile gangway 13 across the platform until reaching a position wherein the mobile gangway 13 should face (if the guided vehicle is not yet completely stopped) or faces (if the guided vehicle already stopped) the door 22 of the guided vehicle. Optionally, it can further control the vertical moving means in order to lift the mobile gangway. Said longitudinal and/or vertical moving may take place before complete stopping of the guided vehicle or after its stopping. Detectors are then used for detecting the exact position of the vehicle door 22 and can be used for a fine tuning of the longitudinal moving means and/or vertical moving means by the control unit 15 until the mobile gangway exactly faces the vehicle door 22. Optionally, the control unit 15 may further control the lateral moving means for bringing the mobile gangway 13 close to the door 22 of the guided vehicle.

Preferentially, the control unit 15 is configured for automatically pairing with a door system of the door 22 that the mobile gangway has to face or is facing. For this pairing, a wireless connection might be used by the door system and the control unit for communicating with each other. Once both devices are paired, the control unit 15 automatically sends a signal to the door system, wherein said signal is configured for informing the door system that the mobile gangway is facing the door 22. The reception of this signal triggers the automatic opening of the door 22 by the door system. Said door system might be part of the system according to the invention and is configured for being installed on-board a guided vehicle, and for controlling the opening and closing of the door 22 by pairing and communicating with the control unit 15. Once the door 22 open, the control unit 15 may then further control the lateral moving means for moving the mobile gangway towards the door 22 and/or optionally the deployment of the mobile plates 132, wherein a set of said mobile plates 132 is deployed so as to cover the gap between the horizontal plate 130 of the mobile gangway and the floor of the guided vehicle 2 so as to bridge said gap for the whole width of the door 22. A camera or other sensors might be used for detecting and determining the door width and guided vehicle floor height, as well as the distance separating the horizontal plate 130 from the guided vehicle 2 so that a failure or a wrong mobile gangway position due for instance to an incorrect GVAC, might be prevented.

At step 207, once the mobile gangway reached the position determined by the control unit 15, safely bridging therefore the gap between the guided vehicle floor and the platform floor, then the control unit preferentially automatically opens one or several doors 121 of the gate 12 for enabling a user 9 to access or leave the guided vehicle via the mobile gangway 13. Optionally or alternately, the control unit 15 is configured for automatically sending a boarding signal, said boarding signal being configured for triggering a generation of an acoustic and/or visual signal once the mobile gangway 13 is ready for the boarding or disembarking. Preferentially, the control unit 15 is configured for automatically sending a warning signal in case of a failure and/or incorrect positioning, wherein said warning signal is configure for automatically triggering the sending of a visual and/or acoustic warning message to the user.

In conclusion, the present invention proposes a fully automatic solution for enabling people with reduced mobility to easily and safely access guided vehicles, wherein the proposed system and method do not require a high precision stopping of the guided vehicle due to a longitudinal motion of the mobile gangway 13 through longitudinal moving means configured for automatically moving the mobile gangway (13) along a length of the platform (3) under control of the control unit (15), said system and method automatically adapting the position and configuration of the mobile gangway (13) to any type of guided vehicle door.

## Claims

1. System (1) for providing an access to a guided vehicle (2), said system (1) comprising:
- a mobile gangway (13) configured for enabling a person (9) to get in or off the guided vehicle (2);
- moving means (14) configured for moving the mobile gangway (13) with respect to a platform (3);
- detectors (16) for determining an exact position of a door (22) of the guided vehicle (2) stopping at said platform (3);
and
- a control unit (15) configured for automatically determining a position for the mobile gangway (13) with respect to the platform (3) so that the mobile gangway (13) forms at said position a bridge between the guided vehicle door (22) and the platform (3), and for automatically controlling said moving means (14) for moving said mobile gangway (13) to said position.

2. System (1) according to claim 1, wherein said position is automatically determined by the control unit (15) from guided vehicle access characteristics (hereafter "GVACs") of the guided vehicle (2) stopping at said platform (3) and from said exact position.

3. System (1) according to claim 1 or 2, wherein the moving means (14) are configured for automatically moving the mobile gangway (13) according to three degrees of freedom.

4. System (1) according to one of the claims 1 to 3,
wherein said moving means (14) comprise longitudinal moving means configured for automatically moving the mobile gangway (13) along a length of the platform (3) under control of the control unit (15).

5. System (1) according to one of the claims 1 to 4,
wherein the control unit (15) is configured for communicating with the guided vehicle (2) and/or a remote control center.

6. System (1) according to one of the claims 1 to 5, comprising a presence detector installed on-board the guided vehicle (2) and/or on the platform (3) and configured for detecting a presence or absence of a person (9) requiring the mobile gangway (13) for getting in or off the guided vehicle (2).

7. System (1) according to claims 2 to 6, wherein the GVACs are acquired or received from one or several GVACs providers among which a remote control center, or a memory of the control unit (15), or a database, or the guided vehicle (2), or a sensor device of the system (1).

8. System (1) according to claims 2 to 7, wherein the GVACs comprise at least one of the following parameters:
- position(s) of the doors with respect to the guided vehicle length;
- estimated positions of the doors with respect to the platform after stop of the guided vehicle;
- width of the doors;
- number of doors;
- height of the floor of the guided vehicle with respect to the platform floor, or with respect to a track or rail contact surface;
- distance between successive doors;
- estimated gap between the guided vehicle side and the platform.

9. System (1) according to one of the claims 1 to 8,
wherein the mobile gangway comprises a horizontal plate (130) connected to a ramp 131 extending from the horizontal plate 130 to the platform floor.

10. System (1) according to claim 1 to 9, wherein the mobile gangway (13) comprises a series of individually motorized mobile plates (132) configured for bridging a gap between the mobile gangway (13) and the guided vehicle floor.

11. Method for providing to an access to a guided vehicle (2) stopping at a platform (3), the method comprising the steps:
- automatically detecting (201) a presence of a person (9) needing a mobile gangway (13) for getting off or getting in the guided vehicle (2);
- automatically launching (202) a determination of a position of the mobile gangway (13) with respect to the platform (3);
- automatically controlling (206) moving means for moving the mobile gangway at the position that has been previously determined.

12. Method according to claim 11, wherein the determination of said position comprises:
- receiving or acquiring (203), by means of a control unit (15), GVACs for the guided vehicle (2) stopping at said platform (3);
- automatically determining (204), by said control unit (15) an exact position of a door (22) of the guided vehicle (2) once it stopped at the platform (3); and
- automatically determining (205), by said control unit (15) said position for the mobile gangway (13) from said GVACs and exact position.

13. Method according to claim 11 or 12, wherein the launching (202) of the position determination is triggered by the reception of a first signal and a second signal, wherein the first signal comprises data indicating the arrival and stopping of the guided vehicle (2) at the platform (3), and the second signal is a signal configured for indicating the presence or absence of said person (9).

14. Method according to claim 13, wherein the first signal is a signal sent to the control unit (15) by the guided vehicle (2), or by a remote control center, or by the detector (16).

15. Method according to claim 13 or 14, wherein the second signal is sent to the control unit (15) from a presence detector of the system according to the invention installed on-board the guided vehicle (2) and/or on the platform (3).

## Patentansprüche

1. System (1) zum Bereitstellen eines Zugangs zu einem geführten Fahrzeug (2), wobei das System (1) Folgendes umfasst:
- eine mobile Gangway (13), die zum Ermöglichen für eine Person (9) konfiguriert ist, in das geführte Fahrzeug (2) ein- oder daraus auszusteigen;
- Bewegungsmittel (14), das zum Bewegen der mobilen Gangway (13) in Bezug auf eine Plattform (3) konfiguriert ist;
- Detektoren (16) zum Bestimmen einer genauen Position einer Tür (22) des geführten Fahrzeugs (2), das an der Plattform (3) hält;
und
- eine Steuereinheit (15), die zum automatischen Bestimmen einer Position für die bewegliche Gangway (13) in Bezug auf die Plattform (3), so dass die bewegliche Gangway (13) an dieser Position eine Brücke zwischen der Tür (22) des geführten Fahrzeugs und der Plattform (3) bildet, und zum automatischen Steuern des Bewegungsmittels (14) konfiguriert ist, um die bewegliche Gangway (13) zu der Position zu bewegen.

2. System (1) nach Anspruch 1, wobei die Position von der Steuereinheit (15) automatisch durch die Zugangseigenschaften des geführten Fahrzeugs (im Folgenden "GVAC") des geführten Fahrzeugs (2), das an der Plattform (3) hält, und anhand der genauen Position bestimmt wird.

3. System (1) nach Anspruch 1 oder 2, wobei das Bewegungsmittel (14) zum automatischen Bewegen der mobilen Gangway (13) gemäß drei Freiheitsgraden konfiguriert ist.

4. System (1) nach einem der Ansprüche 1 bis 3, wobei das Bewegungsmittel (14) ein Längsbewegungsmittel umfassen, das zum automatischen Bewegen der mobilen Gangway (13) unter Steuerung der Steuereinheit (15) entlang einer Länge der Plattform (3) konfiguriert ist.

5. System (1) nach einem der Ansprüche 1 bis 4, wobei die Steuereinheit (15) zum Kommunizieren mit dem geführten Fahrzeug (2) und/oder einer Fernsteuerzentrale konfiguriert ist.

6. System (1) nach einem der Ansprüche 1 bis 5, umfassend einen Anwesenheitsdetektor, der an Bord des geführten Fahrzeugs (2) und/oder auf der Plattform (3) installiert ist und zum Detektieren einer Anwesenheit oder Abwesenheit einer Person (9) konfiguriert ist, die die mobile Gangway (13) erfordert, um in das geführte Fahrzeug (2) ein- oder daraus auszusteigen.

7. System (1) nach einem der Ansprüche 2 bis 6, wobei die GVAC von einem oder mehreren GVAC-Anbietern erfasst oder empfangen werden, darunter eine Fernsteuerungszentrale oder ein Speicher der Steuereinheit (15) oder eine Datenbank oder das geführte Fahrzeug (2) oder eine Sensorvorrichtung des Systems (1).

8. System (1) nach einem der Ansprüche 2 bis 7, wobei die GVAC mindestens einen der folgenden Parameter umfassen:
- Position(en) der Türen in Bezug auf die Länge des geführten Fahrzeugs;
- geschätzte Positionen der Türen in Bezug auf die Plattform nach dem Halten des geführten Fahrzeugs;
- Breite der Türen;
- Anzahl der Türen;
- Höhe des Bodens des geführten Fahrzeugs in Bezug auf den Plattformboden oder in Bezug auf eine Gleis- oder Schienenkontaktfläche;
- Entfernung zwischen aufeinanderfolgenden Türen;
- geschätzter Spalt zwischen der Seite des geführten Fahrzeugs und der Plattform.

9. System (1) nach einem der Ansprüche 1 bis 8, wobei die mobile Gangway eine horizontale Platte (130) umfasst, die mit einer Rampe 131 verbunden ist, die sich von der horizontalen Platte 130 bis zu dem Plattformboden erstreckt.

10. System (1) nach einem der Ansprüche 1 bis 9, wobei die bewegliche Gangway (13) eine Reihe von einzeln motorisierten beweglichen Platten (132) umfasst, die zum Überbrücken eines Spalts zwischen der beweglichen Gangway (13) und dem Boden des geführten Fahrzeugs konfiguriert sind.

11. Verfahren zum Bereitstellen eines Zugangs zu einem geführten Fahrzeug (2), das an einer Plattform (3) hält, wobei das Verfahren die folgenden Schritte umfasst:
- automatisches Detektieren (201) einer Anwesenheit einer Person (9), die eine mobile Gangway (13) benötigt, um in das geführte Fahrzeug (2) ein- oder daraus auszusteigen;
- automatisches Starten (202) einer Bestimmung einer Position der mobilen Gangway (13) in Bezug auf die Plattform (3);
- automatisches Steuern (206) eines Bewegungsmittels, um die bewegliche Gangway zu der zuvor bestimmten Position zu bewegen.

12. Verfahren nach Anspruch 11, wobei die Bestimmung der Position Folgendes umfasst:
- Empfangen oder Erfassen (203) von GVAC für das geführte Fahrzeug (2), das an der Plattform (3) hält, durch eine Steuereinheit (15);
- automatisches Bestimmen (204) einer genauen Position einer Tür (22) des geführten Fahrzeugs (2), wenn es an der Plattform (3) gehalten hat, durch die Steuereinheit (15); und
- automatisches Bestimmen (205) der Position für die bewegliche Gangway (13) durch die Steuereinheit (15) anhand der GVAC und der genauen Position.

13. Verfahren nach Anspruch 11 oder 12, wobei das Starten (202) der Positionsbestimmung durch den Empfang eines ersten Signals und eines zweiten Signals ausgelöst wird, wobei das erste Signal Daten umfasst, die die Ankunft und das Halten des geführten Fahrzeugs (2) an der Plattform (3) anzeigen, und das zweite Signal ein Signal ist, das zum Anzeigen der Anwesenheit oder Abwesenheit der Person (9) konfiguriert ist.

14. Verfahren nach Anspruch 13, wobei das erste Signal ein Signal ist, das von dem geführten Fahrzeug (2) oder von einer Fernsteuerungszentrale oder von dem Detektor (16) an die Steuereinheit (15) gesendet wird.

15. Verfahren nach Anspruch 13 oder 14, wobei das zweite Signal von einem Anwesenheitsdetektor des erfindungsgemäßen Systems, der an Bord des geführten Fahrzeugs (2) und/oder auf der Plattform (3) installiert ist, an die Steuereinheit (15) gesendet wird.

## Revendications

1. Système (1) permettant de fournir un accès à un véhicule guidé (2), ledit système (1) comprenant :
- une passerelle mobile (13) configurée afin de permettre à une personne (9) d'entrer ou de sortir du véhicule guidé (2) ;
- des moyens mobiles (14) configurés afin de déplacer la passerelle mobile (13) par rapport à une plate-forme (3) ;
- des détecteurs (16) permettant de déterminer une position exacte d'une porte (22) du véhicule guidé (2) qui s'arrête à ladite plate-forme (3) ;
et
- une unité de commande (15) configurée afin de déterminer automatiquement une position pour la passerelle mobile (13) par rapport à la plate-forme (3) de sorte que la passerelle mobile (13) forme dans ladite position un pont entre la porte du véhicule guidé (22) et la plate-forme (3), et afin de commander automatiquement lesdits moyens mobiles (14) permettant de déplacer ladite passerelle mobile (13) dans ladite position.

2. Système (1) selon la revendication 1, dans lequel ladite position est automatiquement déterminée par l'unité de commande (15) à partir des caractéristiques d'accès au véhicule guidé (ci-après dénommées « GVAC ») du véhicule guidé (2) qui s'arrête à ladite plate-forme (3) et à partir de ladite position exacte.

3. Système (1) selon la revendication 1 ou 2, dans lequel les moyens mobiles (14) sont configurés afin de déplacer automatiquement la passerelle mobile (13) selon trois degrés de liberté.

4. Système (1) selon l'une des revendications 1 à 3, dans lequel lesdits moyens mobiles (14) comprennent des moyens mobiles longitudinaux configurés afin de déplacer automatiquement la passerelle mobile (13) le long d'une longueur de la plate-forme (3) sous le contrôle de l'unité de commande (15).

5. Système (1) selon l'une des revendications 1 à 4, dans lequel l'unité de commande (15) est configurée afin de communiquer avec le véhicule guidé (2) et/ou un centre de commande à distance.

6. Système (1) selon l'une des revendications 1 à 5, comprenant un détecteur de présence installé à bord du véhicule guidé (2) et/ou sur la plate-forme (3) et configuré afin de détecter une présence ou une absence d'une personne (9) nécessitant la passerelle mobile (13) permettant d'entrer ou de sortir du véhicule guidé (2).

7. Système (1) selon les revendications 2 à 6, dans lequel les GVAC sont acquises ou reçues depuis un ou plusieurs fournisseurs de GVAC, parmi lesquels un centre de commande à distance, ou une mémoire de l'unité de commande (15), ou une base de données, ou le véhicule guidé (2), ou un dispositif capteur du système (1).

8. Système (1) selon les revendications 2 à 7, dans lequel les GVAC comprennent au moins un des paramètres suivants :
- position(s) des portes par rapport à la longueur du véhicule guidé ;
- positions estimées des portes par rapport à la plate-forme après l'arrêt du véhicule guidé ;
- largeur des portes ;
- nombre de portes ;
- hauteur du sol du véhicule guidé par rapport au sol de la plate-forme, ou par rapport à une surface de contact de la piste ou du rail ;
- distance entre des portes successives ;
- intervalle estimé entre le côté du véhicule guidé et la plate-forme.

9. Système (1) selon l'une des revendications 1 à 8, dans lequel la passerelle mobile comprend une plaque horizontale (130) reliée à une rampe (131) s'étendant depuis la plaque horizontale (130) jusqu'au sol de la plate-forme.

10. Système (1) selon les revendications 1 à 9, dans lequel la passerelle mobile (13) comprend une série de plaques mobiles individuellement motorisées (132) configurées afin de faire un pont sur un intervalle entre la passerelle mobile (13) et le sol du véhicule guidé.

11. Procédé de fourniture d'un accès à un véhicule guidé (2) arrêté à une plate-forme (3), le procédé comprenant les étapes consistant à :
- détecter automatiquement (201) une présence d'une personne (9) ayant besoin d'une passerelle mobile (13) afin de sortir ou afin d'entrer dans le véhicule guidé (2) ;
- lancer automatiquement (202) une détermination d'une position de la passerelle mobile (13) par rapport à la plate-forme (3) ;
- commander automatiquement (206) des moyens mobiles permettant de déplacer la passerelle mobile dans la position qui a été précédemment déterminée.

12. Procédé selon la revendication 11, dans lequel la détermination de ladite position comprend :
- la réception ou l'acquisition (203), au moyen d'une unité de commande (15), de GVAC pour le véhicule guidé (2) qui s'arrête à ladite plate-forme (3) ;
- la détermination automatique (204), par ladite unité de commande (15) d'une position exacte d'une porte (22) du véhicule guidé (2) une fois qu'il est arrêté à la plate-forme (3) ; et
- la détermination automatique (205), par ladite unité de commande (15) de ladite position pour la passerelle mobile (13) à partir desdites GVAC et de la position exacte.

13. Procédé selon la revendication 11 ou 12, dans lequel le lancement (202) de la détermination de la position est provoqué par la réception d'un premier signal et d'un second signal, dans lequel le premier signal comprend des données indiquant l'arrivée et l'arrêt du véhicule guidé (2) à la plate-forme (3) et le second signal est un signal configuré afin d'indiquer la présence ou l'absence de ladite personne (9).

14. Procédé selon la revendication 13, dans lequel le premier signal est un signal envoyé à l'unité de commande (15) par le véhicule guidé (2), ou par un centre de commande à distance, ou par le détecteur (16).

15. Procédé selon la revendication 13 ou 14, dans lequel le second signal est envoyé à l'unité de commande (15) par un détecteur de présence du système selon l'invention installé à bord du véhicule guidé (2) et/ou sur la plate-forme (3).
